(19) Europäisches Patentamt
European Patent Office
Office européen des brevets

(11) **EP 1 744 120 A1**

(12) **EUROPÄISCHE PATENTANMELDUNG**

(43) Veröffentlichungstag:
**17.01.2007 Patentblatt 2007/03**

(51) Int Cl.:
**G01B 13/20** (2006.01)

(21) Anmeldenummer: **05015351.9**

(22) Anmeldetag: **14.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **SIEMENS AKTIENGESELLSCHAFT 80333 München (DE)**

(72) Erfinder: **Lehmann, Christoph Dr 47506 Neukirchen-Vluyn (DE)**

(54) **Verfahren zur Ermittlung des Querschnitts eines Leiters**

(57) Die Erfindung betrifft ein Verfahren zur Ermittlung des Querschnitts eines Leiters (1), wobei der Leiter (1) im Wesentlichen länglich ausgebildet ist und in Längsrichtung einen im Wesentlichen konstanten Querschnitt aufweist, wobei der Leiter zumindest einen Kühlkanal (2) mit einem in Längsrichtung im Wesentlichen konstanten Kühlkanalquerschnitt aufweist, und dass Verfahren folgende Schritte umfasst:

a) Ankoppeln einer Messanordnung (7), umfassend einen strömungsmediumbehälter (9), an den Kühlkanal (2) des Leiters (1);

b) Öffnen eines Ventils (10), damit das Strömungsmedium durch den Kühlkanal (2) strömt;

c) Messung eines Wertes mindestens einer physikalischen Größe des strömenden Strömungsmediums an einer ersten Stelle des Kühlkanals (2), wobei die physikalische Größe eine Funktion des Kühlkanalquerschnitts ist;

d) Ermittlung des Kühlkanalquerschnitts;

e) Berechnung des Leiterquerschnitts durch Subtraktion des Kühlkanalquerschnitts von dem Gesamtleiterquerschnitt, der durch die Leiteraußenabmessungen ermittelt wird.

FIG 4

EP 1 744 120 A1

**Beschreibung**

Ein Generator umfasst im Wesentlichen einen Stator und einen drehbar gelagerten Läufer. Sowohl der Stator als auch der Läufer weisen hohl gebohrte Kupferleitungen auf. Um die Erwärmung des Generators zu begrenzen, müssen der Stator und der Läufer gekühlt werden. Es gibt im wesentlich drei wichtige Arten der Kühlung: Frischluftkühlung: über ein Gebläse wird Frischluft angesaugt, durch entsprechende Filter gereinigt und in den Generator eingeblasen. Geschlossener Kreislauf: die gereinigte Luft wird in einem geschlossenen Kreislauf durch den Generator geblasen und in Wärmetauschern durch Kühlwasser wieder abgekühlt. Die Abwärme kann auch zu Heizzwecken verwendet werden. Reinwasserkühlung: bei Generatoren mit großer Leistung wird eigens aufbereitetes Wasser durch den Generator in einen geschlossenen Kreislauf geleitet. Wasserstoffkühlung: der in einem Kreislauf bewegte gasförmige Wasserstoff gibt über die an den Seiten der Generatoren angebrachten Wasserkühler die Verlustwärme ab. Das Gehäuse der Generatoren muss dabei gasdicht und druckfest ausgeführt sein, um auch einer eventuellen Knallgasexplosion standhalten zu können. Die Verwendung von Wasserstoffgas anstelle der Luft bewirkt geringere Gasreibungsverluste und doppeltes Wärmeabfuhrvermögen. Dabei muss aber zwischen Wasserkraftgeneratoren und Turbogeneratoren (in Wärmekraftwerken) unterschieden werden.

Es ist hierbei üblich, ein als Kühlmittel wirkendes Strömungsmedium durch einen Kühlkanal der Kupferleitung strömen zu lassen.

Bei einer eingebauten direkt gekühlten Generator-Läuferwicklung ist die Ermittlung der Querschnittsfläche der Kühlkanäle und der Wicklungsleiter schwierig. Dies ist besonders schwierig, wenn keine ausreichende Dokumentation zu den Generator-Läuferwicklungen vorhanden ist.

Die Querschnittsfläche der Kühlkanäle wird daher abgeschätzt, was zu sehr ungenauen Ergebnissen führen kann. Eine weitere Möglichkeit, die Querschnittsfläche der Kühlkanäle zu bestimmen, besteht darin, die einzelnen Generator-Läuferwicklungen auszubauen und anschließend auszumessen. Dieses Verfahren ist aber teuer und zeitaufwändig.

Aufgabe der vorliegenden Erfindung ist es, ein einfaches und genaues Verfahren zur Ermittlung des Querschnitts eines Leiters anzugeben.

Die Aufgabe wird gelöst durch ein Verfahren zur Ermittlung des Querschnitts eines Leiters, wobei der Leiter im wesentlich länglich ausgebildet ist und in Längsrichtung einen im Wesentlichen konstanten Querschnitt aufweist. Der Leiter weist hierbei zumindest einen Kühlkanal mit einem in Längsrichtung im Wesentlichen konstanten Kühlkanalquerschnitt auf, und das Verfahren umfasst folgende Schritte:

a) Ankoppeln einer Messanordnung, umfassend einen Strömungsmediumbehälter, an den Kühlkanal des Leiters;
b) Öffnen eines Ventils, damit das Strömungsmedium durch den Kühlkanal strömt;
c) Messung eines Wertes mindestens einer physikalischen Größe des strömenden Strömungsmediums an einer ersten Stelle des Kühlkanals, wobei die physikalische Größe eine Funktion des Kühlkanalquerschnitts ist;
d) Ermittlung des Kühlkanalquerschnitts;
e) Berechnung des Leiterquerschnitts durch Subtraktion des Kühlkanalquerschnitts von dem Gesamtleiterquerschnitt, der durch die Leiterabmessungen ermittelt wird.

Die Erfindung nutzt die Erkenntnis aus, dass ein durch ein Kühlkanal strömendes Strömungsmedium physikalischen Gesetzen unterliegt und durch die Ermittlung einer physikalischen Größe, die eine Funktion des Kühlkanalquerschnitts ist, eine Ermittlung des Kühlkanalquerschnitts möglich ist. Jedes Strömungsmedium unterliegt bei der Durchströmung eines Kühlkanals physikalischen Gesetzen, wie z. B. dem Gesetz nach Hagen-Poiseuille. Durch Messung einer physikalischen Größe des Strömungsmediums kann der Kühlkanalquerschnitt ermittelt werden. Die Erfindung geht hierbei von dem Gedanken aus, dass eine Messanordnung, die einen Strömungsmediumbehälter umfasst, an den Kühlkanal des Leiters angekoppelt wird. Der Anschluss kann z. B. durch eine Gasanschlusskammer an den oder die Gaseintrittsöffnung eines Leiters in einem Wickelkopfraum in geeigneter Weise angebracht werden. Zum Beispiel kann dieser Anschluss durch Formpassung und Dichtungsmittel oder durch Abklebung erfolgen. Zumindest muss sichergestellt werden, dass aus dem Strömungsmediumbehälter ausströmendes Strömungsmedium vollständig in den Kühlkanal des Leiters eintritt. Es sollte vermieden werden, dass Leckluft austritt. Durch Öffnung eines Ventils strömt Strömungsmedium aus dem Strömungsmediumbehälter in den Kühlkanal. Das Strömungsmedium tritt anschließend an einer geeigneten Stelle aus dem Leiter wieder hinaus. Zum Beispiel kann das Strömungsmedium in einer Ballenmitte aus der Wicklung austreten. Weitere Kühlkanalaustritte im Wickelkopf sind dabei in geeigneter Weise dicht zu verschließen, so dass sichergestellt ist, dass das Strömungsmedium nur über einen einzigen Weg durch den Leiter strömen kann. Durch die Messung eines Wertes zumindest einer physikalischen Größe des strömenden Strömungsmediums an einer ersten Stelle des Kühlkanals, wird der Kühlkanalquerschnitt ermittelt. Die physikalische Größe muss hierbei eine Funktion des Kühlkanalquerschnittes sein. Sobald der Kühlkanalquerschnitt ermittelt werden konnte, wird der Leiterquerschnitt durch Subtraktion des Kühlkanalquerschnittes von dem Gesamtwert des Querschnittes ermittelt. Der Gesamtwert des Querschnitts kann beispielsweise durch Leiteraußenabmessungen ermittelt werden. Bei einem rechtwinkligen Leiter wird der Gesamtleiterquerschnitt aus der Breite multipliziert mit der Höhe des Leiters gebildet.

Sofern ein Leiter mehrere Kühlkanäle aufweist, sollte jeder Kühlkanal mit dem Verfahren ausgemessen werden.

In einer Weiterbildung der Erfindung wird der Wert der mindestens einen physikalischen Größe an einer zweiten Stelle des Kühlkanals gemessen.

Durch das Hinzufügen einer zweiten Messstelle an einer zweiten Stelle des Kühlkanals wird die Messgenauigkeit der Messanordnung erhöht. In erster Näherung unterliegt eine Strömung einem Antrieb der durch einen Druckunterschied hervorgerufen wird. In laminaren Strömungen erfolgt ein Druckabfall in Richtung der Strömung. Der gemessene Druck an zwei Stellen des Kühlkanals würde zwei unterschiedliche Werte aufweisen und mit Hilfe dieser Werte wäre die Strömung charakterisierbar.

Vorteilhafterweise wird die mindestens eine physikalische Größe aus der Gruppe ausgewählt, die die Temperatur, den Druck und den Volumenstrom des Strömungsmediums umfasst. Eine Auswahl aus weiteren physikalische Größen ist denkbar. Die Temperatur, der Druck und der Volumenstrom sind vergleichsweise einfach messbare physikalische Größen. Gleichfalls sind diese physikalischen Größen für die Ermittlung eines Strömungsquerschnittes äußerst hilfreich.

In einer vorteilhaften Weitergestaltung erfolgt die Ermittlung des Kühlkanalquerschnitts durch Berechnung mit theoretischen Modellen. Beispielsweise kann eine kreisförmige Kühlquerschnittsfläche angenommen werden. Verschiedene physikalische Größen einer laminaren Strömung durch eine kreisförmige Querschnittsfläche können durch das Hagen-Poiseuillesche-Gesetz beschrieben werden. Durch Messen des Druckes und der Temperatur und des Volumenstromes des Strömungsmediums kann mit Hilfe des Hagen-Poiseuilleschen-Gesetzes der Kühlkanalquerschnitt ermittelt werden. Bei anderen Kühlkanalquerschnitten, wie z. B. rechteckförmigen bzw. dreieckigen müssen andere theoretische Modelle berücksichtigt werden. Da allerdings ein kreisförmiger Kühlkanalquerschnitt fertigungstechnisch am einfachsten zu gestalten ist, ist das Gesetz nach Hagen-Poiseuille das naheliegendste Modell.

In einer Weiterbildung der Erfindung erfolgt die Ermittlung des Kühlkanalquerschnitts durch Vergleich mit Referenzmessungen an einem Referenzleiter mit bekanntem Leiterquerschnitt und bekanntem Kühlkanalquerschnitt. Beispielsweise kann an einen Modellleiter mit bekannten Außenabmessungen und bekanntem Kühlkanalquerschnitt eine Messanordnung angekoppelt werden. Anschließend kann eine Messung der physikalischen Größen der Strömungen durchgeführt werden. Die daraufhin erhaltenen Werte der physikalischen Größen können in einer Datenbank gespeichert werden. Anschließend kann ein weiteres Referenzmodell eines weiteren Modellleiters mit bekannten Leiteraußenabmessungen und Kühlkanalquerschnitten verwendet werden, um physikalische Größen zu ermitteln. Eine Messung an einem Leiter, dessen Leiterabmessungen und Querschnittsfläche nicht bekannt sind, kann mit den Messungen die mit den vorgenannten Messverfahren ermittelt wurden verglichen werden. Mit dem Vergleich der gemessenen physikalischen Größen und den referenzierten physikalischen Größen kann der Kühlkanalquerschnitt ermittelt werden.

Zweckdienlicherweise wird als Strömungsmedium Wasserstoff ($H_2$) eingesetzt. Da Wasserstoff im Generatorenbau bevorzugt zu Kühlungszwecken verwendet wird, bietet es sich an, Wasserstoff als Strömungsmedium zu verwenden.

In Generatoren, in denen Luft als Kühlungsmittel verwendet wird, bietet es sich an, Luft als Strömungsmedium einzusetzen.

Genauso gut können in Generatoren, in denen Flüssigkeiten als Kühlmittel eingesetzt werden, die Messanordnungen mit einer Flüssigkeit als Strömungsmedium verwendet werden.

Schließlich wird das Verfahren an einem Leiter einer Generatorwicklung eingesetzt.

Anhand der Beschreibung und der Figuren werden Ausführungsbeispiele der Erfindung erläutert. Dabei haben mit denselben Bezugszeichen versehene Komponenten die gleiche Funktionsweise.

Es zeigen

Figur 1    eine schematische Darstellung eines Leiters;
Figur 2    eine Querschnittsansicht des Leiters;
Figur 3    eine schematische Darstellung des Leiters mit zwei Kühlkanälen;
Figur 4    eine schematische Darstellung einer Messanordnung, die an einem Leiter angekoppelt ist.

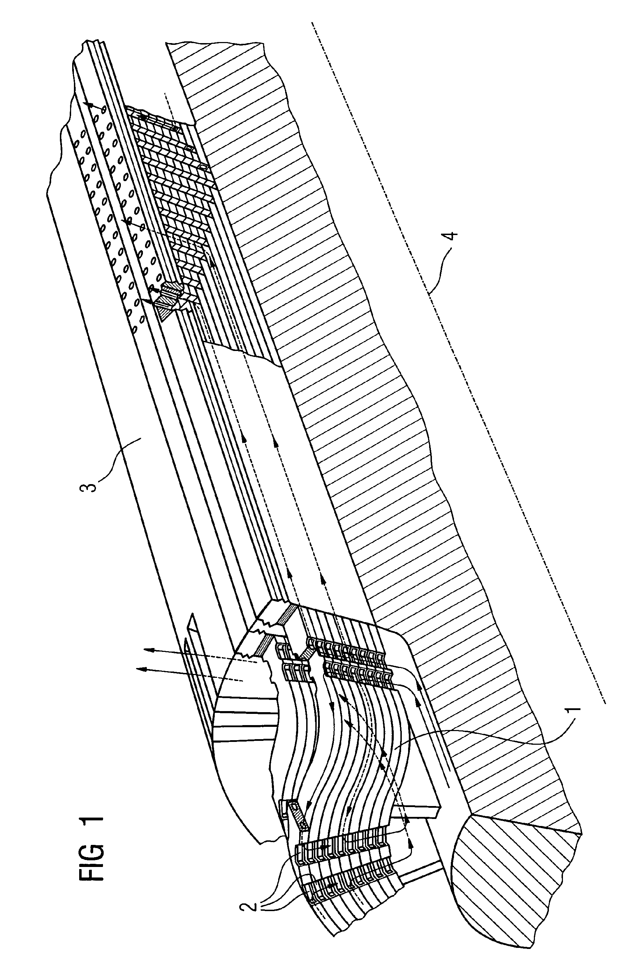

In der Figur 1 ist in schematischer Weise ein Leiter 1 dargestellt, der mehrere Kühlkanäle 2 aufweist. Der Übersichtigkeit wegen sind in der Figur 1 lediglich drei Kühlkanäle mit dem Bezugszeichen 2 versehen. Im Betrieb strömt durch den Leiter 1 ein vergleichsweise hoher elektrischer Strom, der zu einer starken Erwärmung des Leiters 1 führt. Der Leiter 1 weist Bohrungen auf, wobei die Kühlkanäle 2 jeweils einen Querschnitt aufweisen, der in Längsrichtung im Wesentlichen konstant ist. Der Leiter 1 ist auf einer Anordnung 3 angebracht. Die Anordnung 3 mit dem Leiter 1 ist über eine Rotationsachse 4 drehbar gelagert. Im Betrieb strömt durch den Kühlkanal 2 ein Strömungsmedium. Beispielsweise kann Wasserstoff ($H_2$), Luft oder Flüssigkeit als Strömungsmedium dienen. Es sind aber auch andere Strömungsmedien denkbar.

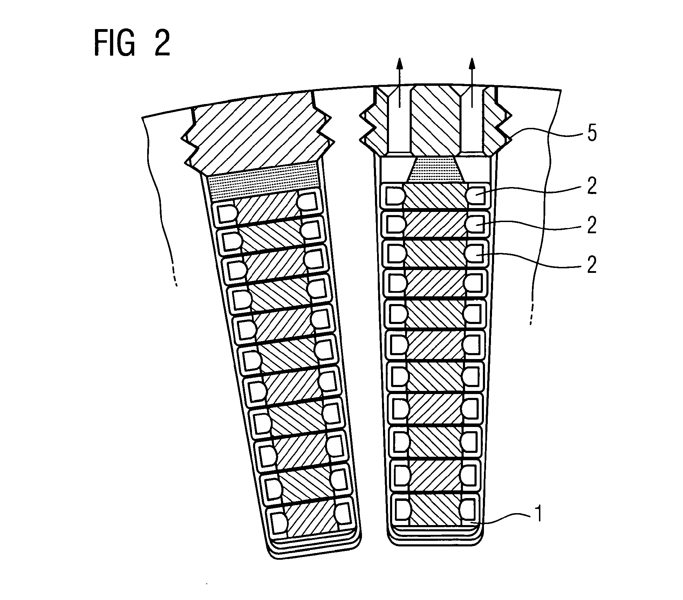

In der Figur 2 ist eine Querschnittsansicht des Leiters 1 zu sehen. Der Leiter 1 wird über Nuten 5 an die Anordnung 3 angekoppelt. Der Leiter 1 ist länglich ausgebildet und weist in Längsrichtung einen im Wesentlichen konstanten rechteckförmigen Querschnitt auf. Der Leiter 1 weist mehrere Kühlkanäle 2 auf. Der Übersichtlichkeit wegen sind lediglich drei Kühlkanäle mit den Bezugszeichen 2 versehen.

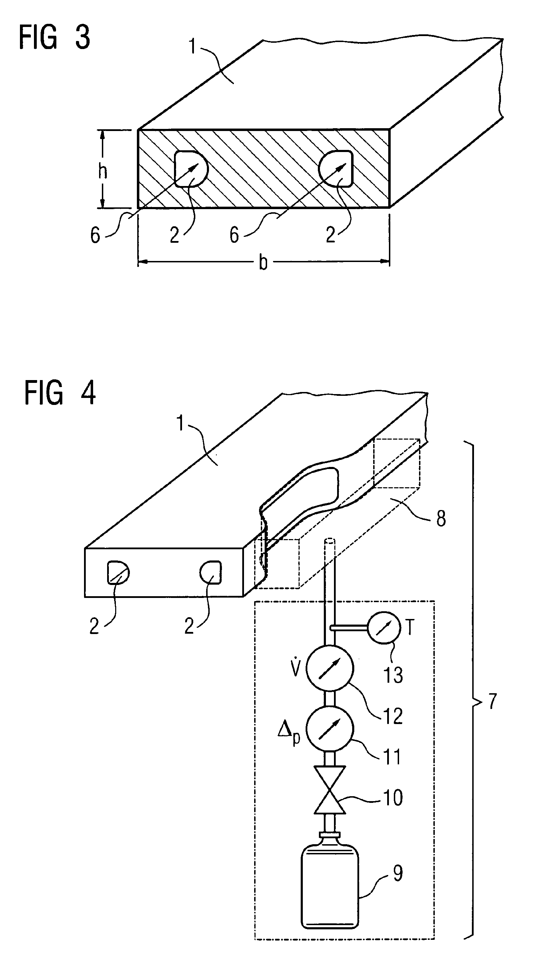

In der Figur 3 ist eine schematische Ansicht des Leiters 1 mit zwei Kühlkanälen 2 dargestellt. Im Betrieb strömt ein Strömungsmedium, das man auch als Kühlmedium bezeichnen kann, in einer Strömungsrichtung 6 durch den Kühlkanal 2. Die physikalischen Größen, die das Strömungsmedium charakterisieren, wie z. B. der Druck, die Temperatur oder der Volumenstrom ändern sich je nach geometrischer Form des Kühlkanalquerschnittes. Beispielsweise ist der Druck einer Strömung bei einer kreisförmigen Querschnittsfläche anders als bei einer rechteckförmigen Querschnittsfläche. Und gerade diesen Effekt nutzt die Erfindung aus.

In der Figur 4 ist eine Messanordnung 7 dargestellt. Die Messanordnung 7 umfasst eine Gasanschlusskammer 8, einen Strömungsmediumbehälter 9, ein Ventil 10, einen Druckmesser 11, einen Volumenstrommesser 12 und einen Temperaturmesser 13. Geeigneter Weise sollte die Gasanschlusskammer 8 möglichst dicht an den Leiter 1 angekoppelt werden. Es sollte sichergestellt sein, dass der Kühlkanal 2 keine Lecks aufweist. Geeigneter Weise sollte an einer zweiten Stelle des Kühlkanals 2 eine weitere Messanordnung 7 vorgesehen sein, die im Wesentlichen die gleichen Messapparate aufweist wie die Messanordnung 7, die an der ersten Stelle angekoppelt wird.

Zunächst wird das Ventil 10 geöffnet, damit das Strömungsmedium an der ersten Stelle des Kühlkanals 2 in den Kühlkanal 2 strömen kann. Anschließend wird mindestens eine physikalische Größe des Strömungsmediums gemessen, wobei die physikalische Größe eine Funktion des Kühlkanalquerschnittes ist. Die physikalische Größe ist zum Beispiel aus der Gruppe ausgewählt, die die Temperatur, den Druck und den Volumenstrom des Strömungsmediums umfasst. Es genügt, eine physikalische Größe zu ermitteln. Die Messgenauigkeit wird jedoch erhöht, wenn mehrere physikalische Größen ermittelt werden. Des Weiteren wird die Messgenauigkeit erhöht, wenn an einer zweiten Stelle des Kühlkanals Werte derselben physikalischen Größe ermittelt werden, da dazu mit Differenzwerten für die physikalische Größe gearbeitet werden kann. Dies kann ein sonst erforderliches Kalibrieren ersetzen.

Anhand theoretischer Modelle wie z. B. dem Hagen-Poiseuilleschen-Gesetz, kann der Kühlkanalquerschnitt ermittelt werden. Die Strömung durch einen kreisförmigen Querschnitt kann dadurch folgendermaßen beschrieben werden: $\dfrac{v}{t} = \dfrac{\alpha \bullet R^4 \bullet \Delta p}{\mu \bullet l}$ , $\alpha =$ Konstante, R = Radius,

$\dfrac{v}{t} =$ Volumenstrom, $\Delta P =$ Druckunterschied, $\mu =$ Viskosität, 1 = Länge

Sofern der Kühlkanalquerschnitt eine andere Geometrie, abweichend von der kreisförmigen, aufweist, müssen andere theoretische Modelle berücksichtigt werden.

Der Kühlkanalquerschnitt kann aber ebenso durch einen Vergleich mit Referenzmessungen an einem Referenzleiter mit bekanntem Leiterquerschnitt und bekanntem Kühlkanalquerschnitt erfolgen.

Der Gesamtleiterquerschnitt kann anschließend durch Subtraktion des Kühlkanalquerschnitts von dem Gesamtleiterquerschnitt, der durch die Leiteraußenabmessungen ermittelt wird, berechnet werden.

In der Regel strömt das Strömungsmedium aus dem elektrischen Leiter bei Atmosphärendruck wieder aus.

Vorteilhafterweise sollte bei einer Messung der Volumenstrom mit dem Einstellventil so eingestellt werden, dass die im Betrieb vorherrschenden Strömungsverhältnisse in den Kühlkanälen herrschen.

Mit der Messanordnung 7 können auch direkt wassergekühlte Leiter eingesetzt werden.

Das Verfahren kann dort eingesetzt werden, wo eine Dokumentation über die genauen Abmessungen des Leiters keine Dokumentation vorherrscht. Wenn der Kühlkanalquerschnitt nicht bekannt ist, ist es für den Betreiber eines Generators schwierig, einen Kühlkreislauf zu ermitteln, der genügend Strömungsmedium liefert, um eine möglichst gute Kühlung zu erwirken. Auch Leistungssteigerungen durch die Erhöhung des Druckes des Strömungsmediums sind durch die genaue Kenntnis der Strömungswiderstände in den Läuferleitern einfacher möglich. Die genaue Kenntnis der Strömungswiderstände können durch die Messanordnung 7 zur Verfügung stehen.

Der in Figur 3 dargestellte Leiter hat eine Höhe h und eine Breite b. Die Leiterquerschnittsfläche ergibt sich somit aus $A_1 = b*h$. Den Kühlkanalquerschnitt kann man mit dem Buchstaben $A_K$ beschreiben. Die Querschnittsfläche des Leiters ergibt sich somit zu $A_{Cu} = A_2 - A_K$.

Das Verfahren kann bei Leitern einer Generatorwicklung eingesetzt werden. Andere Einsatzgebiete sind denkbar.

## Patentansprüche

1. Verfahren zur Ermittlung des Querschnitts eines Leiters (1),
   wobei der Leiter im Wesentlichen länglich ausgebildet ist und in Längsrichtung einen im Wesentlichen konstanten Querschnitt aufweist,
   wobei der Leiter (1) zumindest einen Kühlkanal (2) mit einem in Längsrichtung im Wesentlichen konstanten Kühlkanalquerschnitt aufweist,
   und das Verfahren folgende Schritte umfasst:

   a) Ankoppeln einer Messanordnung (7), umfassend einen srömungsmediumbehälter (9), an den Kühlkanal (2) des Leiters (1);

b) Öffnen eines Ventils(10), damit das Strömungsmedium durch den Kühlkanal (2) strömt;
c) Messung eines Wertes mindestens einer physikalischen Größe des strömenden Strömungsmediums an einer ersten Stelle des Kühlkanals (2), wobei die physikalische Größe eine Funktion des Kühlkanalquerschnitts ist;
d) Ermittlung des Kühlkanalquerschnitts;
e) Berechnung des Leiterquerschnitts durch Subtraktion des Kühlkanalquerschnitts von dem Gesamtleiterquerschnitt, der durch die Leiteraußenabmessungen ermittelt wird.

2. Verfahren nach Anspruch 1,
bei dem der Wert der mindestens einen physikalischen Größe an einer zweiten Stelle des Kühlkanals (2) gemessen wird.

3. Verfahren nach Anspruch 1,
bei dem die mindestens eine physikalische Größe aus der Gruppe ausgewählt ist, die die Temperatur, den Druck und den Volumenstrom des Strömungsmediums umfasst.

4. Verfahren nach einem der vorhergehenden Ansprüche,
bei dem der Schritt d) durch Berechnung mit theoretischen Modellen erfolgt.

5. Verfahren nach einem der Ansprüche 1 bis 3,
bei dem der Schritt d) durch Vergleich mit Referenzmessung an einem Referenzleiter mit bekanntem Leiterquerschnitt und bekanntem Kühlkanalquerschnitt erfolgt.

6. Verfahren nach einem der vorhergehenden Ansprüche,
bei dem Wasserstoff ($H_2$) als Strömungsmedium eingesetzt wird.

7. Verfahren nach einem der vorhergehenden Ansprüche,
bei dem Luft als Strömungsmedium eingesetzt wird.

8. Verfahren nach einem der vorhergehenden Ansprüche,
bei dem eine Flüssigkeit als Strömungsmedium eingesetzt wird.

9. Verfahren nach einem der vorhergehenden Ansprüche,
das an einem Leiter (1) einer Generatorwicklung eingesetzt wird.

10. Messanordnung (7) zur Ermittlung eines Strömungsquerschnitts umfassend einen Strömungsmediumsbehälter (9), einen mit dem Strömungsmediumbehälter (9) strömungstechnisch verbundenen Ventil (10), einen mit dem Ventil (10) strömungstechnisch verbundenen Druckmesser (11), einen mit dem Druckmesser (11) strömungstechnisch verbundenen Volumenstrommesser (12), einen mit dem Volumenstrommesser (12) strömungstechnisch verbundenen Temperaturmesser (13) und einen mit dem Temperaturmesser (13) strömungstechnisch verbundenen Anschluss (8), der zum Anbringen an eine Kühlbohrung (2) eines Leiters (1) ausgebildet ist.

FIG 1

## FIG 2

## FIG 3

## FIG 4

**Europäisches Patentamt**

**EUROPÄISCHER RECHERCHENBERICHT**

Nummer der Anmeldung

EP 05 01 5351

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 207 089 A (ABT ET AL) 4. Mai 1993 (1993-05-04) | 10 | G01B13/20 |
| A | * Spalte 2, Zeile 24 - Zeile 54 * * Spalte 3, Zeile 53 - Spalte 4, Zeile 54 * * Zusammenfassung; Anspruch 1; Abbildungen 1,2 * ----- | 1-9 | |
| A | DE 10 51 520 B (VEB THERMOMETERVERK GERABERG) 26. Februar 1959 (1959-02-26) * das ganze Dokument * ----- | 1-10 | |

RECHERCHIERTE SACHGEBIETE (IPC)

G01B
G01F

Der vorliegende Recherchenbericht wurde für alle Patentansprüche erstellt

| Recherchenort | Abschlußdatum der Recherche | Prüfer |
|---|---|---|
| Den Haag | 21. November 2005 | Passier, M |

**ANHANG ZUM EUROPÄISCHEN RECHERCHENBERICHT**
**ÜBER DIE EUROPÄISCHE PATENTANMELDUNG NR.**

EP 05 01 5351

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2005

| Im Recherchenbericht angeführtes Patentdokument | Datum der Veröffentlichung | Mitglied(er) der Patentfamilie | Datum der Veröffentlichung |
|---|---|---|---|
| US 5207089 A | 04-05-1993 | DE 3900836 A1<br>WO 9008299 A1<br>EP 0453444 A1<br>ES 2038452 T3<br>JP 2996721 B2<br>JP 4502666 T | 19-07-1990<br>26-07-1990<br>30-10-1991<br>16-07-1993<br>11-01-2000<br>14-05-1992 |
| DE 1051520 B | 26-02-1959 | KEINE | |

EPO FORM P0461

Für nähere Einzelheiten zu diesem Anhang : siehe Amtsblatt des Europäischen Patentamts, Nr.12/82